# FASCICULE DE BREVET EUROPEEN

(11) **EP 1 938 475 B1**
(45) Date de publication et mention de la délivrance du brevet: **27.03.2013**
(21) Numéro de dépôt: 06831219.8
(22) Date de dépôt: 22.09.2006
(51) Int. Cl.: H04B 7/185

(54) **DISPOSITIF D'EMISSION ET/OU RECEPTION DE SIGNAUX A REUTILISATION DE FREQUENCE PAR AFFECTATION D'UNE CELLULE PAR TERMINAL, POUR UN SATELLITE DE COMMUNICATION**
VORRICHTUNG FÜR EINEN KOMMUNKATIONSSATELLITEN ZUM SENDEN UND/ODER EMPFANGEN VON SIGNALEN MIT FREQUENZWIEDERHOLUNG DURCH ZELL-ZUTEILUNG VON EINER STATION
DEVICE FOR TRANSMITTING AND/OR RECEIVING FREQUENCY REUSE SIGNALS BY ASSIGNING A CELL PER TERMINAL, FOR A COMMUNICATION SATELLITE

(30) Priorité: 23.09.2005 FR 0552836
(43) Date de publication de la demande: 02.07.2008
(73) Titulaire: THALES, 92200 Neuilly sur Seine (FR)
(72) Inventeur: GAYRARD, Jean-Didier, F-31100 Toulouse (FR); BELIS, Eric, F-31100 Toulouse (FR)
(74) Mandataire: Esselin, Sophie
(86) Numéro de dépôt international: PCT/FR2006/050931
(87) Numéro de publication internationale: WO 2007/034124

(56) Documents cités:
- EP-A- 0 854 590
- US-B1- 6 442 148

## Description

L'invention concerne les réseaux de communication par satellite, et plus précisément l'utilisation de la bande passante fréquentielle allouée aux satellites de communication multifaisceaux au sein de tels réseaux.

Comme le sait l'homme de l'art, la rentabilité de certaines applications de transmission (ou collecte) de données par satellite impose que les satellites disposent de très importantes capacités de transmission, en terme de débit. C'est notamment le cas des applications multimédia dites « à large bande », lesquelles requièrent souvent des capacités de l'ordre de plusieurs dizaines de gigabits par seconde.

Aujourd'hui, les bandes passantes fréquentielles qui sont allouées aux satellites de (télé-)communication sont insuffisantes pour leur permettre d'atteindre de telles capacités.

Pour améliorer la situation, on recourt à une technique de réutilisation de fréquence consistant, d'une part, à subdiviser la zone de service, que le satellite doit couvrir, en cellules à chacune desquelles est affectée une sous-bande passante égale à une fraction de la bande passante qui est allouée au service concerné, et d'autre part, à affecter des sous-bandes passantes identiques à des cellules qui sont suffisamment bien isolées entre-elles. En définissant des motifs réguliers de cellules il est possible de réutiliser plusieurs fois plusieurs sous-bandes passantes différentes, permettant ainsi de multiplier parfois par plusieurs dizaines les ressources en fréquence.

Cependant, cette technique de réutilisation de fréquence au moyen de motifs réguliers présente plusieurs inconvénients.

Un premier inconvénient est le manque de flexibilité. En effet, les dimensions et la position de chaque cellule sont fixes, et chaque cellule se voit allouer une sous-bande passante de façon définitive. Par conséquent, si l'on souhaite modifier les dimensions d'une cellule ou la largeur de sa sous-bande passante, cela bouleverse toutes les cellules qui utilisent la même sous-bande passante et donc tout le système d'allocation de fréquences, ce qui impose une redéfinition complète de l'allocation.

Un second inconvénient découle du manque de flexibilité. En effet, les cellules qui ont un trafic inférieur à la moyenne gaspillent de la fréquence, tandis que celles qui pourraient avoir un trafic supérieur à la moyenne ne peuvent acquérir les ressources en fréquence qui permettraient de satisfaire la demande. Ce gaspillage de fréquence est à la fois structurel, puisqu'il résulte d'une planification à long terme du trafic, et conjoncturel, puisqu'il résulte de la non prise en compte des variations de trafic à court terme dans le temps (par exemple entre le jour et la nuit) et dans l'espace (par exemple en raison d'événements locaux).

L'invention a donc pour but de remédier à tout ou partie des inconvénients précités.

Elle propose à cet effet un dispositif dédié à l'émission et/ou la réception de signaux radiofréquence (ou micro-onde) représentatifs de données dans un satellite de communication (multifaisceaux) disposant d'une bande passante fréquentielle fixée et comprenant des moyens d'émission et/ou réception capables d'émettre et/ou recevoir des signaux dans des faisceaux multiples associables à des cellules.

Ce dispositif se caractérise par le fait qu'il comprend des moyens de contrôle chargés de définir un nombre choisi de cellules de dimensions et positions choisies, et de configurer les moyens d'émission et/ou réception afin de définir des faisceaux associés chacun à l'une au moins des cellules définies, à une fréquence de porteuse (de signaux) choisie et à une bande passante fréquentielle choisie en fonction des besoins de chacune des cellules et compte tenu de la bande passante fréquentielle disponible au niveau du satellite.

Le dispositif selon l'invention peut fonctionner dans trois types de situations : une première situation dans laquelle il est dédié exclusivement à la réception de signaux en provenance des cellules qu'il a définies, une deuxième situation dans laquelle il est dédié exclusivement à l'émission de signaux à destination des cellules qu'il a définies, et une troisième situation dans laquelle il est dédié à la fois à la réception et à l'émission de signaux en provenance et vers des cellules qu'il a définies.

A cet effet, ses moyens d'émission et/ou réception peuvent être agencés sous la forme d'une antenne réceptrice de type actif comprenant au moins :
- S éléments rayonnants (ou sources ou encore aériens) dédiés à la réception et/ou à l'émission de signaux de porteuses différentes, avec S supérieur à un (1),
- S premiers moyens de traitement comportant chacun une entrée/sortie propre à fonctionner comme une entrée en réception afin d'être alimentée en signaux reçus par l'un des éléments rayonnants et comme une sortie en émission afin de délivrer des signaux d'au plus N porteuses différentes, avec N supérieur à 1, et N sorties/entrées propres à fonctionner comme des sorties en réception afin de délivrer respectivement N signaux de N porteuses différentes et comme des entrées en émission afin de recevoir des signaux de N porteuses différentes,
- SxN deuxièmes moyens de traitement comprenant chacun une entrée/ sortie propre à fonctionner comme une entrée en réception afin d'être alimentée en signaux de l'une des N porteuses par l'une des sorties/ entrées de l'un des premiers moyens de traitement et comme une sortie en émission afin de délivrer des signaux résultant d'une sommation des N porteuses reçues sur M entrées, et M sorties/entrées propres à fonctionner comme des sorties en réception afin de délivrer chacune des signaux identiques résultant de la duplication des signaux de l'une des N porteuses reçus sur son entrée/sortie et comme des entrées en émission afin de recevoir chacune des signaux de l'une des N porteuses, avec M supérieur à 1, et
- N groupes de M troisièmes moyens de traitement dédiés chacun à l'une des N porteuses, chaque troisième moyen de traitement comprenant, d'une part, S entrées/sorties, respectivement couplées aux sorties/entrées correspondantes des deuxièmes moyens de traitement de sorte qu'une k-ième sortie/entrée d'un deuxième moyen de traitement soit couplée à une i-ème entrée/sortie d'un troisième moyen de traitement correspondant, et propres à fonctionner comme des entrées en réception afin d'être alimentées chacune par les signaux dupliqués par la sortie/entrée correspondante du deuxième moyen de traitement correspondant et comme des sorties en émission afin de délivrer chacune des signaux de la porteuse de son groupe, issus de signaux reçus associés à un faisceau parmi NxM, et d'autre part, une sortie/entrée propre à fonctionner comme une sortie en réception afin de délivrer des signaux de la porteuse du groupe, associés à un faisceau parmi NxM et comme une entrée en émission afin de recevoir les signaux qui présentent la porteuse du groupe auquel il appartient, associés au faisceau parmi NxM.

Ses moyens d'émission et/ou réception peuvent également comprendre S quatrièmes moyens de traitement intercalés chacun entre l'un des éléments rayonnants et le premier moyen de traitement correspondant, et chargés d'amplifier et/ou de convertir en numérique/analogique et/ou de translater en fréquence soit les signaux reçus par l'élément rayonnant afin d'alimenter (en réception) le premier moyen de traitement correspondant en signaux amplifiés et/ou numérisés et/ou translatés en fréquence, soit les signaux provenant du premier moyen de traitement correspondant afin d'alimenter (en émission) l'élément rayonnant correspondant en signaux amplifiés et/ou analogiques et/ou translatés en fréquence.

Par ailleurs, chaque premier moyen de traitement peut comprendre N filtres sélectifs en fréquence propres chacun à sélectionner, en réception, l'une des fréquences de porteuse des signaux reçus, parmi au plus N, et/ou propres à regrouper ensemble des signaux d'au plus N porteuses différentes reçus sur ses N sorties/entrées. Chaque premier moyen de traitement peut être également (et éventuellement) chargé de changer les fréquences des N porteuses avant de les délivrer sur ses N sorties/entrées ou sur son entrée/sortie.

En outre, ses moyens de contrôle peuvent être chargés de configurer chaque premier moyen de traitement afin de fixer les fréquences et bandes passantes respectives des porteuses des signaux délivrés et/ou reçus sur chacune de ses sorties/entrées, ainsi que le nombre de porteuses différentes.

De plus, ses moyens de contrôle peuvent être chargés d'activer un nombre de troisièmes moyens de traitement choisi en fonction des zones dans lesquelles sont situées les cellules définies et/ou des distances entre cellules définies.

Enfin, ses moyens de contrôle peuvent être chargés de définir le nombre choisi de cellules de dimensions et positions choisies en fonction d'instructions représentatives des positions respectives des stations (terrestres) qui doivent être situées dans les cellules et des fréquences des porteuses et bandes passantes qui doivent être respectivement allouées à ces stations. Une partie au moins de ces instructions peut être transmise par une station de contrôle (terrestre) et/ou par des moyens de calcul implantés dans le satellite et déterminées par ce dernier à partir des signaux de NxM porteuses délivrés sur chaque sortie/entrée des troisièmes moyens de traitement et/ou par des moyens de localisation qu'il peut comprendre, chargés de détecter les positions des stations à partir des signaux qui sont reçus par ses moyens d'émission/réception.

L'invention propose également un satellite de communication équipé d'un dispositif d'émission et/ou réception de signaux radiofréquence (ou micro-onde) du type de celui présenté ci-avant.

L'invention est particulièrement bien adaptée, bien que de façon non exclusive, aux applications multimédia à large bande et aux applications de collecte de données en bande étroite, voire très étroite.

D'autres caractéristiques et avantages de l'invention apparaîtront à l'examen de la description détaillée ci-après, et des dessins annexés, sur lesquels :
- la figure 1 illustre de façon très schématique et fonctionnelle les relations existants entre un satellite de communication, équipé d'un exemple de réalisation d'un dispositif d'émission et/ou réception de signaux selon l'invention, des stations terrestres, une station de contrôle et une passerelle de communication satellitaire,
- la figure 2 illustre de façon très schématique et fonctionnelle un premier exemple de réalisation d'un dispositif d'émission et/ou réception de signaux selon l'invention, dédié à la réception, et
- la figure 3 illustre de façon très schématique et fonctionnelle un second exemple de réalisation d'un dispositif d'émission et/ou réception de signaux selon l'invention, dédié à l'émission.

Les dessins annexés pourront non seulement servir à compléter l'invention, mais aussi contribuer à sa définition, le cas échéant.

L'invention a pour objet de permettre l'augmentation de la capacité de transmission d'un satellite de communication (multifaisceaux) par une nouvelle utilisation de la bande passante fréquentielle qui lui est allouée pour un service donné.

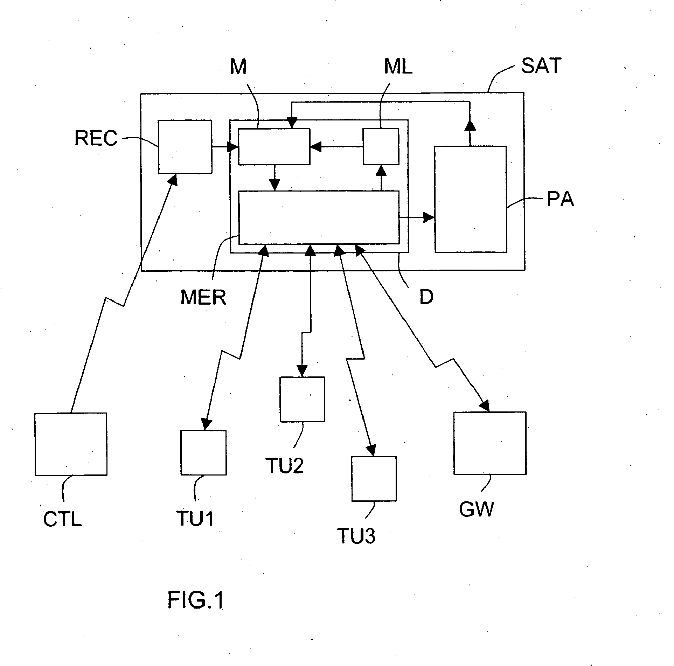

On se réfère tout d'abord à la figure 1 pour présenter un exemple de système de communication par satellite auquel s'applique l'invention.

L'invention propose d'implanter dans un satellite (de communication) SAT un dispositif d'émission et/ou réception de signaux représentatifs de données D.

Dans ce qui suit, on considère à titre d'exemple non limitatif que le satellite SAT est utilisé pour l'échange de signaux radiofréquence (ou micro-onde) représentatifs de données multimédia à large bande entre des terminaux (ou stations) de communication terrestres TUh (ici h = 1 à 3, mais il peut prendre n'importe quelle valeur entière supérieure à un (1)) et une passerelle de communication satellitaire terrestre (ou « gateway ») GW.

Comme on le verra plus loin, le système peut également comprendre une station de contrôle terrestre CTL chargée de transmettre au satellite SAT des messages d'information et/ou d'instruction. Pour réceptionner ces messages, le satellite SAT doit disposer d'un module de réception REC, indépendant du dispositif D embarqué (comme illustré) ou pouvant faire partie de ce dernier.

Un dispositif D, selon l'invention, comprend au moins des moyens d'émission et/ou réception de signaux MER et un module de contrôle MC.

Les moyens d'émission et/ou réception de signaux MER sont agencés de manière à émettre et/ou recevoir des signaux de porteuses différentes dans des faisceaux multiples associables à des cellules terrestres dans lesquelles sont implantés des terminaux (ou stations) de communication (ci-après appelés « terminaux ») TUh. Ils constituent préférentiellement une antenne de type actif. Dans ce qui suit, on appellera « antenne active MER » les moyens d'émission et/ou réception de signaux MER.

Le module de contrôle MC est couplé à l'antenne active MER. Il est chargé de définir un nombre choisi de groupes d'au moins une cellule de dimensions et positions choisies, et de configurer l'antenne active MER afin de définir des faisceaux Fjk associés chacun, d'une première part, à l'une au moins des cellules définies, d'une deuxième part, à une fréquence de porteuse choisie, et d'une troisième part, à une (sous-)bande passante fréquentielle choisie, en fonction des besoins de chacune des cellules et compte tenu de la bande passante fréquentielle disponible au niveau du satellite SAT pour le service concerné.

En d'autres termes, le dispositif selon l'invention D combine deux principes. Le premier principe consiste à réutiliser les fréquences sur la base des porteuses (ou de bandes fréquentielles étroites). La réutilisation de fréquence ne se fait plus alors au niveau des sous-bandes passantes (typiquement plusieurs dizaines ou centaines de MHz de bande), mais au niveau de la porteuse élémentaire (typiquement quelques MHz). Le second principe consiste à créer (ou définir) une cellule pour chaque porteuse. La bande passante allouée à chaque cellule est alors celle de la porteuse élémentaire (soit typiquement quelques MHz). Un groupe d'au moins un terminal TUh est associé à chaque cellule, si bien que chaque terminal TUh d'un groupe utilise la porteuse attribuée à la cellule dont il fait partie.

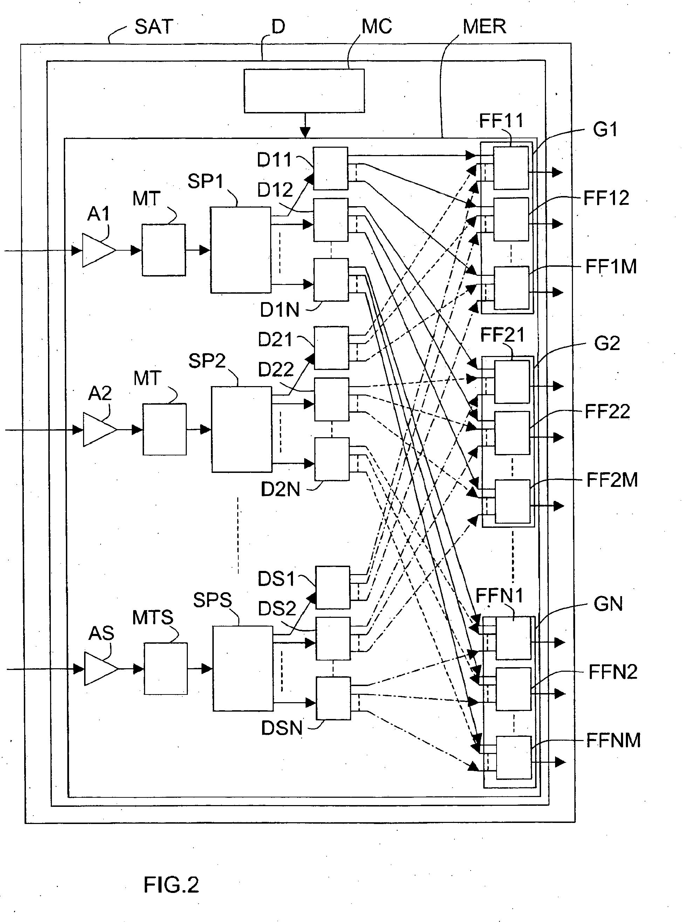

On se réfère maintenant à la figure 2 pour décrire un premier exemple de réalisation d'un dispositif selon l'invention D, dédié exclusivement à la réception de signaux provenant de terminaux situés dans des cellules définies par son module de contrôle MC en fonction des besoins et des contraintes.

Comme cela est illustré sur la figure 2, l'antenne active MER est ici agencée en récepteur. Elle comprend tout d'abord S éléments rayonnants (ou sources ou encore aériens) Ai (i = 1 à S, S > 1) dédiés à la réception des signaux de porteuses différentes, qui sont transmis par les terminaux TUh implantés dans les cellules définies par le module de contrôle MC. Par exemple, ces éléments rayonnants Ai sont réalisés sous la forme de cornets, d'éléments imprimés (ou « patches »), de fentes, ou d'hélices.

Bien que cela ne soit pas une obligation, la sortie de chaque élément rayonnant Ai est couplée à l'entrée d'un (quatrième) module de traitement MTi. Ce dernier peut assurer une ou plusieurs opérations, comme par exemple amplifier les signaux analogiques qui représentent les signaux reçus par l'élément rayonnant Ai auquel il est couplé et/ou effectuer un éventuel changement de fréquence et/ou effectuer une conversion analogique/numérique.

Dans ce qui suit, on considère que les signaux qui sont délivrés sur la sortie de chaque module de traitement MTi sont de type numérique. Par conséquent, les traitements et opérations qui suivent sont ici de type numérique.

L'antenne active MER comprend également S premiers modules de traitement SPi qui assurent chacun la fonction de modules de séparation de porteuses (ou démultiplexeur fréquentiel). Chaque premier module de traitement SPi comporte une entrée EAi, alimentée en signaux numérisés par la sortie de l'un des quatrièmes modules de traitement MTi, et N sorties SAij (j = 1 à N, N > 1) chargées de délivrer respectivement N signaux numérisés associés à N porteuses différentes.

Chaque premier module de traitement SPi comprend par exemple N filtres numériques sélectifs en fréquence. Chaque filtre est chargé de sélectionner l'une des fréquences de porteuse des signaux numérisés reçus sur l'entrée EAi, parmi au plus N fréquences, afin de délivrer les signaux numérisés associés à la porteuse filtrée Pj sur sa sortie qui constitue l'une des sorties SAij.

Chaque premier module de traitement SPi peut être éventuellement chargé de changer les fréquences des N porteuses avant de les délivrer sur ses N sorties SAij.

L'antenne active MER comprend également SxN deuxièmes modules de traitement Dij qui assurent chacun la fonction de duplication de signal. Chaque deuxième module de traitement Dij comprend une entrée EBij, couplée à la sortie SAij du premier module de traitement SPi correspondant, afin d'être alimentée en signaux numérisés présentant la porteuse filtrée Pj, et M sorties SBijk (k = 1 à M, M > 1) chargées de délivrer chacune des signaux numérisés issus de la duplication en interne des signaux reçus sur une entrée EBij. En d'autres termes, chaque deuxième module de traitement Dij est chargé de dupliquer M fois les signaux numérisés qu'il reçoit sur son entrée EBij afin de délivrer sur ses M sorties SBijk M signaux numérisés identiques, associés à une même porteuse Pj.

Enfin, l'antenne active MER comprend également N groupes Gj de M troisièmes modules de traitement FFjk assurant chacun la fonction de formation de faisceaux, chaque groupe Gj étant dédié à l'une des N porteuses Pj.

Chaque troisième module de traitement FFjk comprend S entrées ECijk (i = 1 à S) couplées respectivement aux sorties SBijk des deuxièmes modules de traitement Dij, de sorte que la k-ième sortie SBijk du deuxième module de traitement Dij soit couplée à la i-ème entrée ECijk du troisième module de traitement FFjk. Par exemple :
- si i = S, j = 2 et k = 2, alors la deuxième (k = 2) sortie SBS22 du deuxième module de traitement DS2 est couplée à la S-ième (i = S) entrée ECS22 du deuxième (k = 2) troisième module de traitement FF22 du deuxième (j = 2) groupe G2 associé à la porteuse P2,
- si i = 2, j = 1 et k = M, alors la M-ième (k = M) sortie SB21 M du deuxième module de traitement D21 est couplée à la deuxième (i = 2) entrée EC21 M du M-ième (k = M) troisième module de traitement FF1M du premier (j = 1) groupe G1 associé à la porteuse P1,
- si i = 1, j = N et k = M, alors la M-ième (k = M) sortie SB1NM du deuxième module de traitement D1N est couplée à la première (i = 1) entrée EC1NM du M-ième (k = M) troisième module de traitement FFNM du N-ième (j = N) groupe GN associé à la porteuse PN.

Chaque troisième module de traitement FFjk comprend également une sortie SCjk chargée de délivrer des signaux numérisés, résultant des signaux numérisés reçus sur ses S entrées ECijk et associés à un faisceau parmi NxM et présentant la porteuse Pj du groupe Gj auquel il appartient.

En d'autres termes, l'antenne active réceptrice MER délivre sur chacune de ses NxM sorties SCjk (j = 1 à N, k = 1 à M) des signaux numérisés associés à une porteuse Pj et provenant d'une cellule associée à l'un des NxM faisceaux.

Par exemple, si ces NxM signaux provenant des terminaux TUh doivent être transmis à une passerelle satellitaire GW, le satellite SAT va les multiplexer puis les transmettre au moyen d'une porteuse modulée à destination de cette passerelle satellitaire GW.

Il est important de noter que le module de contrôle MC peut être chargé de configurer chaque premier module de traitement SPi de manière à fixer les fréquences et bandes passantes respectives des porteuses Pj des signaux (numérisés) qu'il délivre sur chacune de ses sorties SAij, ainsi que le nombre de porteuses Pj différentes. En d'autres termes, chacun des N filtres de chaque module de sélection de porteuses SPi peut être activé ou non et la fréquence qu'il filtre et/ou sa bande passante peuvent être fixées en fonction des besoins et des contraintes et compte tenu de la bande passante disponible dans le satellite SAT.

Par ailleurs, le module de contrôle MC peut être chargé d'activer un nombre de troisièmes modules de traitement FFjk choisi en fonction de la configuration des zones dans lesquelles sont situées les cellules qu'il a définies et/ou des distances entre ces cellules (afin qu'elles soient suffisamment isolées entre-elles).

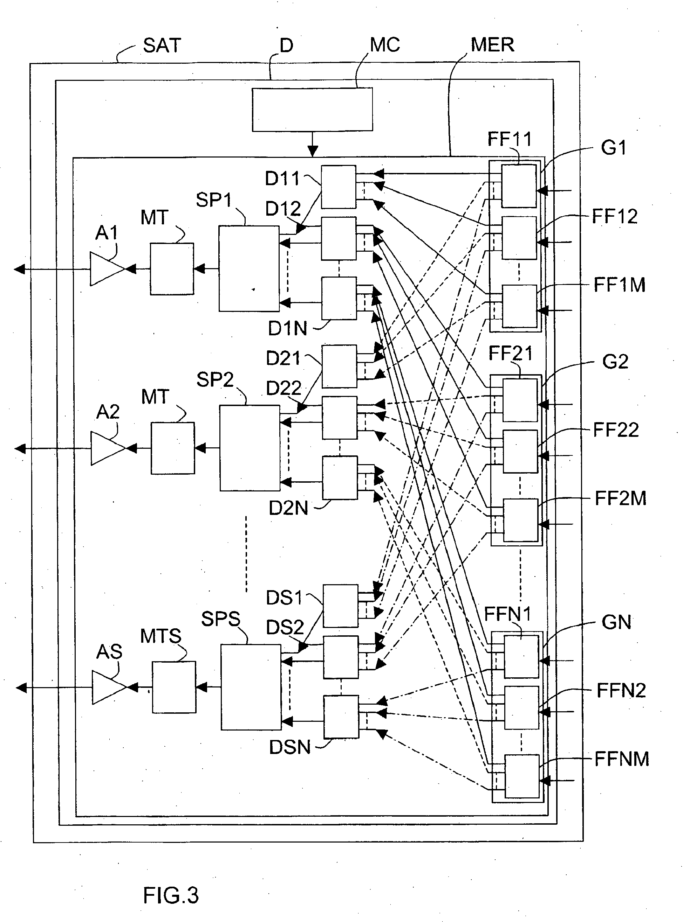

On se réfère maintenant à la figure 3 pour décrire un second exemple de réalisation d'un dispositif selon l'invention D, dédié exclusivement à l'émission de signaux à destination de terminaux situés dans des cellules ou groupes de cellule(s) défini(e)s par son module de contrôle MC en fonction des besoins et des contraintes.

Comme cela est illustré sur la figure 3, l'antenne active MER est ici agencée en émetteur. En raison de la réciprocité de fonctionnement des éléments qui constituent l'antenne active MER, c'est-à-dire de leur aptitude à fonctionner dans une direction comme dans la direction opposée, l'antenne active MER illustrée sur la figure 3 présente une architecture identique à celle de l'antenne active illustrée sur la figure 2. Par conséquent, les opérations effectuées par les éléments constituants l'antenne active émettrice MER (figure 3) sont les réciproques de celles qui sont effectuées par les éléments équivalents qui constituent l'antenne active réceptrice MER (figure 2).

L'antenne active émettrice MER comprend donc :
- N groupes Gj (j = 1 à N, n > 1) de M troisièmes modules de traitement FFjk (k = 1 à M, M > 1) assurant chacun la fonction de formation de faisceaux, et chaque groupe GJ étant dédié à N porteuses Pj différentes. Chaque troisième module de traitement FFjk est le réciproque d'un troisième module de traitement décrit précédemment dans le cas de la réception (figure 2). If comprend une entrée SCjk chargée de recevoir des signaux (de préférence numérisés) associés à un faisceau (parmi NxM) correspondant à une cellule et présentant la porteuse du groupe Gj auquel il appartient, et S sorties ECijk (i = 1 à S, S > 1) chargées de délivrer chacune des signaux numérisés issus des signaux reçus sur son entrée SCjk et présentant sa porteuse Pj,
- SxN deuxièmes modules de traitement Dij assurant chacun la fonction de concentration ou sommation de signaux. Chaque deuxième module de traitement Dij est chargé d'effectuer la somme algébrique des M signaux numérisés provenant de M troisièmes modules de traitement FFjk d'un groupe Gj. Chaque deuxième module de traitement Dij comprend donc M entrées SBijk couplées respectivement aux sorties ECijk correspondantes des troisièmes modules de traitement FFjk du groupe Gj correspondant et une sortie EBij délivrant des signaux numérisés présentant l'une des N porteuses. La k-ième entrée SBijk du deuxième module de traitement Dij est couplée à la i-ème sortie ECijk du troisième module de traitement FFjk,
- S premiers modules de traitement SPi assurant chacun la fonction de regroupeur de porteuses (ou de multiplexeur fréquentiel). Chaque premier module de traitement SPi est chargé de combiner les signaux numérisés qui proviennent des N deuxièmes modules de traitement Dij et qui présentent les N porteuses différentes Pj. Chaque premier module de traitement SPi comprend donc N entrées SAij couplées respectivement aux sorties EBij des N deuxièmes modules de traitement correspondants Dij et une sortie EAi chargée de délivrer des signaux numérisés présentant au plus N porteuses différentes combinées Pj. Chaque premier module de traitement SPi comprend par exemple N filtres numériques sélectifs en fréquence. Comme indiqué précédemment, chaque premier module de traitement SPi peut être éventuellement chargé de changer les fréquences des N porteuses avant de les combiner et de les délivrer (sous forme combinée) sur sa sortie EAi,
- de préférence S quatrièmes modules de traitement MTi (optionnels) comprenant chacun une entrée couplée à la sortie EAi du premier module de traitement SPi correspondant, afin d'être alimenté en signaux numérisés et une sortie chargée de délivrer les signaux sous une forme analogique. En complément de cette conversion numérique/analogique, chaque quatrième module de traitement MTi peut éventuellement amplifier les signaux et/ou changer la fréquence (translation) desdits signaux,
- S éléments rayonnants (ou sources ou encore aériens) Ai chargés d'émettre, à destination des au plus NxM cellules définies par le module de contrôle MC, les signaux analogiques délivrés respectivement par les S quatrièmes modules de traitement MTi.

Comme dans le premier exemple de réalisation, le module de contrôle MC peut être chargé de configurer chaque premier module de traitement SPi de manière à fixer les fréquences et bandes passantes respectives des porteuses Pj des signaux (numérisés) qu'il délivre sur chacune de ses sorties SAij, ainsi que le nombre de porteuses Pj différentes. En d'autres termes, chacun des N filtres de chaque premier module de traitement SPi peut être activé ou non et la fréquence qu'il filtre et/ou sa bande passante peuvent être fixées en fonction des besoins et des contraintes et compte tenu de la bande passante disponible dans le satellite SAT.

Par ailleurs, le module de contrôle MC peut être chargé d'activer un nombre de troisièmes modules de traitement FFjk choisi en fonction de la configuration des zones dans lesquelles sont situées les cellules qu'il a définies et/ou des distances entre ces cellules (afin qu'elles soient suffisamment bien isolées entre-elles).

On a représenté sur les figures 2 et 3, des exemples de réalisation dans lesquels le dispositif selon l'invention D fonctionnait soit en tant que récepteur, soit en tant qu'émetteur. Mais, en raison de la réciprocité de fonctionnement évoquée précédemment, le dispositif D selon l'invention peut à la fois émettre et recevoir des signaux à destination et en provenance de groupes de cellule(s) définis par son module de contrôle MC, tout en conservant la même architecture que celle décrite précédemment. Dans ce cas, une entrée devient une entrée/sortie et une sortie devient une sortie/entrée.

Quel que soit le mode de fonctionnement du dispositif D (en émission et/ou en réception), son module de contrôle MC procède préférentiellement aux définitions des cellules en fonction d'instructions représentatives des positions respectives des terminaux (ou stations) TUh qui doivent être contenus dans les cellules et des fréquences des porteuses et bandes passantes qui doivent être respectivement allouées aux terminaux TUh.

Ces instructions peuvent provenir d'une ou plusieurs sources.

Ainsi, elles peuvent provenir au moins en partie d'une station de contrôle terrestre CTL. Dans ce cas, comme indiqué précédemment, la station de contrôle CTL transmet au satellite SAT des messages contenant les instructions et ce dernier comporte un module de réception REC chargé de les réceptionner et de les communiquer au dispositif D. Ce module de réception REC peut éventuellement faire partie du dispositif D.

Comme cela est illustré sur la figure 1, les instructions peuvent également provenir au moins en partie d'un module de calcul PA implanté dans le satellite SAT. Ce module de calcul PA est alors chargé de déterminer certaines au moins des instructions à partir des signaux de NxM porteuses qui sont délivrés sur chaque sortie/entrée SCjk des troisièmes moyens de traitement FFjk. Cette situation correspond à celle d'un satellite SAT dit régénératif.

Dans ce cas régénératif, le module de contrôle MC effectue également la gestion des ressources. Plus précisément, il vérifie que la dimension (N) des troisièmes moyens de traitement SPi (sélecteurs de porteuses) et le nombre de troisièmes moyens de traitement FFjk (formateurs de faisceaux actifs) sont en adéquation avec le trafic (nombre de terminaux (ou stations) TUh actifs), et il gère l'attribution ou la récupération de ressources (par les premiers SPi et troisièmes FFjk moyens de traitement) en fonction de l'entrée ou de la sortie des terminaux TUh dans le système.

Les instructions peuvent également provenir au moins en partie d'un module de localisation ML faisant de préférence partie du dispositif D, comme illustré sur la figure 1.

Ce module de localisation ML est chargé de détecter et localiser les émissions des terminaux (ou stations) TUh, à partir des signaux qui sont reçus par le module d'émission et/ou réception MER, afin de déterminer les positions de ces terminaux (ou stations) TUh. A cet effet, chaque deuxième module de traitement Dij peut par exemple comporter une sortie/entrée de type SBijk supplémentaire alimentant le module de localisation ML. La détermination des positions des terminaux TUh émetteurs peut alors s'effectuer au moyen d'un algorithme, par exemple de type MUSIC, destiné à tester les directions possibles d'arrivée des signaux.

Le dispositif d'émission et/ou réception de signaux D selon l'invention, et notamment son module de contrôle MC, ses premiers SPi, deuxièmes Dij, troisièmes FFjk, et éventuels quatrièmes MTi modules de traitement peuvent être réalisés sous la forme de circuits électroniques, de modules logiciels (ou informatiques), ou d'une combinaison de circuits et de logiciels.

Le dispositif selon l'invention est particulièrement avantageux lorsque le trafic n'est pas uniforme et qu'il évolue dans le temps, étant donné qu'il offre un taux de réutilisation de fréquence adaptable et supérieur à ceux qu'offrent les dispositifs de l'art antérieur. Par ailleurs, le dispositif selon l'invention offre une flexibilité complète en fréquence (du fait de la possibilité de changer les bandes passantes allouées aux terminaux ou stations) et en couverture (du fait qu'il permet de changer le nombre et la position des terminaux ou stations pris en compte).

L'invention ne se limite pas aux modes de réalisation de dispositif d'émission et/ou réception de signaux et de satellite de communication multifaisceaux décrits ci-avant, seulement à titre d'exemple, mais elle englobe toutes les variantes que pourra envisager l'homme de l'art dans le cadre des revendications ci-après.

## Revendications

1. Dispositif de réception de signaux représentatifs de données (D) pour un satellite de communication (SAT) disposant d'une bande passante fréquentielle fixée et comprenant des moyens de réception (MER) propres à recevoir des signaux dans des faisceaux multiples associables à des cellules, **caractérisé en ce qu'**il comprend des moyens de contrôle (MC) agencés pour définir un nombre choisi de cellules de dimensions et positions choisies, et pour configurer lesdits moyens de réception (MER) de manière à définir des faisceaux associés chacun à l'une au moins desdites cellules définies, à une fréquence de porteuse choisie et à une bande passante fréquentielle choisie en fonction des besoins de chacune desdites cellules et compte tenu de la bande passante fréquentielle disponible au niveau dudit satellite (SAT),
lesdits moyens de réception (MER) étant agencés sous la forme d'une antenne de type actif comprenant au moins :
- S éléments rayonnants (Ai) dédiés à la réception de signaux de porteuses différentes, avec S supérieur à un,
- S premiers moyens de traitement (SPi) comportant chacun une entrée (EAi) propre à être alimentée en signaux reçus par l'un desdits éléments rayonnants (Ai), et N sorties (SAij) propres à délivrer respectivement N signaux de N porteuses différentes, avec N supérieur à 1,
- SxN deuxièmes moyens de traitement (Dij) comprenant chacun une entrée (EBij) propre à être alimentée en signaux de l'une des N porteuses par l'une desdites sorties (SAij) de l'un desdits premiers moyens de traitement (SPi) et M sorties (SBijk) propres à délivrer chacune des signaux identiques résultant de la duplication des signaux de l'une des N porteuses reçus sur ladite entrée (EBij), et
- N groupes (Gj) de M troisièmes moyens de traitement (FFjk) dédiés chacun à l'une des N porteuses, chaque troisième moyen de traitement (FFjk) comprenant, d'une part, S entrées (ECijk), respectivement couplées aux sorties (SBijk) correspondantes desdits deuxièmes moyens de traitement (Dij) de sorte qu'une k-ième sortie (SBijk) d'un deuxième moyen de traitement (Dij) soit couplée à une i-ème entrée (ECijk) d'un troisième moyen de traitement correspondant (FFjk), et de manière à être alimentées chacune par les signaux dupliqués par la sortie (SBijk) correspondante du deuxième moyen de traitement (Dij) correspondant, et d'autre part, une sortie (SCjk) propre à délivrer des signaux de la porteuse du groupe (Gj), associés à un faisceau parmi NxM.

2. Dispositif d'émission de signaux représentatifs de données (D) pour un satellite de communication (SAT) disposant d'une bande passante fréquentielle fixée et comprenant des moyens d'émission (MER) propres à émettre des signaux dans des faisceaux multiples associables à des cellules, **caractérisé en ce qu'**il comprend des moyens de contrôle (MC) agencés pour définir un nombre choisi de cellules de dimensions et positions choisies, et pour configurer lesdits moyens d'émission (MER) de manière à définir des faisceaux associés chacun à l'une au moins desdites cellules définies, à une fréquence de porteuse choisie et à une bande passante fréquentielle choisie en fonction des besoins de chacune desdites cellules et compte tenu de la bande passante fréquentielle disponible au niveau dudit satellite (SAT),
lesdits moyens d'émission (MER) sont agencés sous la forme d'une antenne de type actif comprenant au moins :
- N groupes (Gj) de M troisièmes moyens de traitement (FFjk) dédiés chacun à une porteuse parmi N, chaque troisième moyen de traitement (FFjk) comprenant, d'une part, une entrée (SCjk) propre à recevoir les signaux présentant la porteuse du groupe (Gj) auquel il appartient, associés à un faisceau parmi NxM, et d'autre part S sorties (ECijk) propres à délivrer chacune des signaux de la porteuse de son groupe (Gj), issus de signaux reçus sur son entrée (SCjk),
- SxN deuxièmes moyens de traitement (Dij) comprenant chacun M entrées (SBijk) couplées respectivement aux sorties (ECijk) correspondantes desdits troisièmes moyens de traitement (FFjk) du groupe (Gj) correspondant, propres à recevoir chacune des signaux de l'une des N porteuses, avec M supérieur à 1, et une sortie (EBij) propre à délivrer des signaux résultant d'une sommation des N porteuses reçues sur les M entrées (SBijk),
- S premiers moyens de traitement (SPi) comportant chacun N entrées (SAij) couplées aux sorties (EBij) correspondantes des deuxièmes moyens de traitement (Dij), propres à recevoir des signaux de N porteuses différentes et une sortie (EAi) propre à délivrer des signaux d'au plus N porteuses différentes, et
- S éléments rayonnants (Ai) dédiés à l'émission de signaux de porteuses différentes, avec S supérieur à un.

3. Dispositif d'émission et/ou de réception selon l'une des revendications 1 ou 2, **caractérisé en ce que** lesdits moyens d'émission et/ou réception (MER) comprennent également S quatrièmes moyens de traitement (MTi) intercalés entre l'un desdits éléments rayonnants (Ai) et le premier moyen de traitement (SPi) correspondant, et agencés pour amplifier et/ou convertir en numérique/analogique et/ou translater en fréquence les signaux reçus par ledit élément rayonnant (Ai) ou provenant dudit premier moyen de traitement (SPi) correspondant, afin d'alimenter ledit premier moyen de traitement (SPi) correspondant en signaux amplifiés et/ou numérisés et/ou translatés en fréquence et/ou d'alimenter ledit élément rayonnant (Ai) correspondant en signaux amplifiés et/ou analogiques et/ou translatés en fréquence.

4. Dispositif selon l'une des revendications 1 à 3, **caractérisé en ce que** chaque premier moyen de traitement (SPi) comprend N filtres sélectifs en fréquence propres chacun à sélectionner l'une des fréquences de porteuse des signaux reçus sur son entrée/sortie (EAi), parmi au plus N, et/ou propres à regrouper ensemble des signaux d'au plus N porteuses différentes reçus sur ses N sorties/entrées (SAij).

5. Dispositif selon l'une des revendications 1 à 4, **caractérisé en ce que** chaque premier moyen de traitement (SPi) est agencé pour changer les fréquences des N porteuses avant de les délivrer sur ses N sorties/entrées (SAij) ou sur son entrée/sortie (EAi).

6. Dispositif selon l'une des revendications 1 à 5, **caractérisé en ce que** lesdits moyens de contrôle (MC) sont agencés pour configurer chaque premier moyen de traitement (SPi) de manière à fixer les fréquences et bandes passantes respectives des porteuses des signaux délivrés et/ou reçus sur chacune de ses sorties/entrées (SAij), ainsi que le nombre de porteuses différentes.

7. Dispositif selon l'une des revendications 1 à 6, **caractérisé en ce que** lesdits moyens de contrôle (MC) sont agencés pour activer un nombre de troisièmes moyens de traitement (FFjk) choisi en fonction des zones dans lesquelles sont situées lesdites cellules définies et/ou des distances entre cellules définies.

8. Dispositif selon l'une des revendications 1 à 7, **caractérisé en ce que** lesdits moyens de contrôle (MC) sont agencés pour définir le nombre choisi de cellules de dimensions et positions choisies en fonction d'instructions représentatives des positions respectives de stations (TUh) devant être contenues dans lesdites cellules et des fréquences des porteuses et bandes passantes devant être respectivement allouées auxdites stations (TUh).

9. Dispositif selon la revendication 8, **caractérisé en ce qu'**une partie au moins desdites instructions est transmise par une station de contrôle (CTL).

10. Dispositif selon l'une des revendications 8 et 9, **caractérisé en ce qu'**une partie au moins desdites instructions est fournie par des moyens de calcul (PA) implantés dans ledit satellite (SAT) et déterminées par ce dernier à partir desdits signaux de NxM porteuses délivrés sur chaque sortie/entrée (SCjk) des troisièmes moyens de traitement (FFjk).

11. Dispositif selon l'une des revendications 8 à 10, **caractérisé en ce qu'**il comprend des moyens de localisation (ML) agencés pour détecter les positions desdites stations (TUh) à partir des signaux reçus par lesdits moyens d'émission/réception (MER).

12. Satellite de communication (SAT) pour un réseau de communication, **caractérisé en ce qu'**il comprend un dispositif d'émission et/ou réception de signaux (D) selon l'une des revendications précédentes.

## Claims

1. A device for receiving signals representing data (D) for a communication satellite (SAT) having a fixed frequency pass-band and comprising reception means (MER) that are designed to receive signals in multiple beams that can be associated with cells, **characterised in that** it comprises control means (MC) that are arranged so as to define a selected number of cells with selected dimensions and positions and so as to configure said reception means (MER) so as to define beams that are each associated with at least one of said defined cells, with a selected carrier frequency and with a selected frequency pass-band as a function of the requirements of each of said cells and taking into account the frequency pass-band that is available on said satellite (SAT),
said reception means (MER) being arranged in the form of an active type antenna that comprises at least:
- S radiating elements (Ai) that are designed to receive different carrier signals, with S being greater than one;
- S first processing means (SPi) each comprising an input (EAi) that is designed to be supplied with signals received by one of said radiating elements (Ai), and N outputs (SAij) that are designed to respectively deliver N signals of N different carriers, with N being greater than 1;
- SxN second processing means (Dij) each comprising an input (EBij) that is designed to be supplied with signals from one of the N carriers by one of said outputs (SAij) of one of said first processing means (SPi) and M outputs (SBijk) that are designed to deliver each of the identical signals resulting from the duplication of the signals of one of the N carriers received on said input (EBij); and
- N groups (Gj) of M third processing means (FFjk) that are each dedicated to one of the N carriers, each third processing means (FFjk) comprising, on the one hand, S inputs (ECijk) that are respectively paired with the corresponding outputs (SBijk) of said second processing means (Dij) so that a k-th output (SBijk) of a second processing means (Dij) is paired with an i-th input (ECijk) of a third corresponding processing means (FFjk), and so as to be each supplied with the signals duplicated by the corresponding output (SBijk) of the second corresponding processing means (Dij) and, on the other hand, an output (SCjk) that is designed to deliver signals from the carrier of the group (Gj), which are associated with one beam from NxM.

2. A device for transmitting signals representing data (D) for a communication satellite (SAT) having a fixed frequency pass-band and comprising transmission means (MER) that are designed to transmit signals in multiple beams that can be associated with cells, **characterised in that** it comprises control means (MC) that are arranged so as to define a selected number of cells with selected dimensions and positions, and so as to configure said transmission means (MER) so as to define beams that are each associated with at least one of said defined cells, with a selected carrier frequency and with a selected frequency pass-band as a function of the requirements of each of said cells and taking into account the frequency pass-band that is available on said satellite (SAT),
said transmission means (MER) being arranged in the form of an active type antenna that comprises at least:
- N groups (Gj) of M third processing means (FFjk) that are each dedicated to one carrier from N, each third processing means (FFjk) comprising, on the one hand, an input (SCjk) that is designed to receive the signals presenting the carrier of the group (Gj) to which it belongs, which are associated with one beam from NxM, and, on the other hand, S outputs (ECijk) that are designed to deliver each of the signals of the carrier of their group (Gj), coming from signals received on its input (SCjk);
- SxN second processing means (Dij) each comprising M inputs (SBijk) that are respectively paired with the corresponding outputs (ECijk) of said third processing means (FFjk) of the corresponding group (Gj), each designed to receive signals from one of the N carriers, with M being greater than 1, and one output (EBij) that is designed to deliver signals that result from a summation of the N carriers received on the M inputs (SBijk);
- S first processing means (SPi) each comprising N inputs (SAij) coupled to the corresponding outputs (EBij) of second processing means (Dij), designed to receive signals of N different carriers and one output (EAi) that is designed to deliver signals of at most N different carriers; and
- S radiating elements (Ai) that are designed to transmit different carrier signals, with S being greater than one.

3. The transmitting and/or receiving device according to claim 1 or 2, **characterised in that** said transmission and/or reception means (MER) further comprise S fourth processing means (MTi) disposed between one of said radiating elements (Ai) and the first corresponding processing means (SPi), and arranged so as to amplify and/or digital/analogue convert and/or frequency-translate the signals received by said radiating element (Ai) or originating from said first corresponding processing means (SPi) so as to supply said first corresponding processing means (SPi) with amplified and/or digitised and/or frequency-translated signals and/or supplying said corresponding radiating element (Ai) with amplified and/or analogue and/or frequency-translated signals.

4. The device according to any one of claims 1 to 3, **characterised in that** each first processing means (SPi) comprises N frequency-selective filters that are each designed to select one of the carrier frequencies of the signals received on its input/output (EAi), from at most N, and/or designed to group all of the signals of at most N different carriers received on its N inputs/outputs (SAij).

5. The device according to any one of claims 1 to 4, **characterised in that** each first processing means (SPi) is arranged so as to change the frequencies of the N carriers before delivering them to its N outputs/inputs (SAij) or to its input/output (EAi).

6. The device according to any one of claims 1 to 5, **characterised in that** said control means (MC) are arranged so as to configure each first processing means (SPi) so as to fix the frequencies and respective pass-bands of the carriers of the signals delivered and/or received on each of its outputs/inputs (SAij), as well as the number of different carriers.

7. The device according to any one of claims 1 to 6, **characterised in that** said control means (MC) are arranged so as to activate a number of third processing means (FFjk) that are selected as a function of the zones in which said defined cells are located and/or of the distances between defined cells.

8. The device according to any one of claims 1 to 7, **characterised in that** said control means (MC) are arranged so as to define the selected number of cells with selected dimensions and positions as a function of instructions that represent the respective positions of stations (TUh) that must be contained in said cells and of the frequencies of the carriers and pass-bands that must be respectively assigned to said stations (TUh).

9. The device according to claim 8, **characterised in that** at least part of said instructions is transmitted by a control station (CTL).

10. The device according to claim 8 or 9, **characterised in that** at least part of said instructions is supplied by computation means (PA) that are installed in said satellite (SAT) and determined by said satellite on the basis of said signals of NxM carriers delivered on each output/input (SCjk) of the third processing means (FFjk).

11. The device according to any one of claims 8 to 10, **characterised in that** it comprises locating means (ML) that are arranged so as to detect the positions of said stations (TUh) on the basis of the signals received by said transmission/reception means (MER).

12. A communication satellite (SAT) for a communication network, **characterised in that** it comprises a device for transmitting and/or receiving signals (D) according to any one of the preceding claims.

## Patentansprüche

1. Vorrichtung zum Empfangen von Daten (D) repräsentierenden Signalen für einen Kommunikationssatelliten (SAT) mit einem festen Frequenzpassband und mit Empfangsmitteln (MER) zum Empfangen von Signalen in mehreren Strahlen, die mit Zellen assoziiert werden können, **dadurch gekennzeichnet, dass** sie Steuermittel (MC) umfasst, die so ausgelegt sind, dass sie eine gewählte Anzahl von Zellen mit gewählten Abmessungen und Positionen definieren und die Empfangsmittel (MER) zum Definieren von Strahlen zu konfigurieren, die jeweils mit wenigstens einer der definierten Zellen assoziiert sind, mit einer Trägerfrequenz und einem Frequenzpassband, die in Abhängigkeit von den Anforderungen jeder der Zellen und unter Berücksichtigung des an dem Satelliten (SAT) zur Verfügung stehenden Frequenzpassbands gewählt wurden,
wobei die Empfangsmittel (MER) in Form einer Antenne des aktiven Typs angeordnet sind, die wenigstens Folgendes umfasst:
- S Strahlungselemente (Ai) zum Empfangen von verschiedenen Trägersignalen, wobei S größer als eins ist;
- S erste Verarbeitungsmittel (SPi), die jeweils einen Eingang (EAi), der mit von einem der Strahlungselemente (Ai) empfangenen Signalen gespeist wird, und N Ausgänge (Saij) zum Zuführen von jeweils N Signalen von N unterschiedlichen Trägern umfassen, wobei N größer als 1 ist;
- SxN zweite Verarbeitungsmittel (Dij) jeweils mit einem Eingang (EBij), der mit Signalen von einem der N Träger durch einen der Ausgänge (SAij) von einem der ersten Verarbeitungsmittel (SPi) gespeist wird, und mit M Ausgängen (SBijk) zum Zuführen jedes der identischen Signale aufgrund der Duplizierung der Signale von einem der an dem Eingang (EBij) empfangenen N Träger; und
- N Gruppen (Gj) von M dritten Verarbeitungsmitteln (FFjk), die jeweils für einen der N Träger dediziert sind, wobei jedes dritte Verarbeitungsmittel (FFjk) einerseits S Eingänge (ECijk), die jeweils mit den entsprechenden Ausgängen (SBijk) der zweiten Verarbeitungsmittel (Dij) gepaart sind, so dass ein k-ter Ausgang (SBijk) eines zweiten Verarbeitungsmittels (Dij) mit einem i-ten Eingang (ECijk) eines dritten entsprechenden Verarbeitungsmittels (FFjk) gepaart wird und so dass jeder mit den durch den entsprechenden Ausgang (SBijk) des zweiten entsprechenden Verarbeitungsmittels (Dij) duplizierten Signalen gespeist wird, und andererseits einen Ausgang (SCjk) zum Zuführen der Signale vom Träger der Gruppe (Gj) umfasst, die mit einem Strahl aus NxM assoziiert sind.

2. Vorrichtung zum Senden von Daten (D) repräsentierenden Signalen für einen Kommunikationssatelliten (SAT) mit einem festen Frequenzpassband und mit Sendemitteln (MER) zum Senden von Signalen in mehreren Strahlen, die mit Zellen assoziiert werden können, **dadurch gekennzeichnet, dass** sie Steuermittel (MC) umfasst, die so ausgelegt sind, dass sie eine gewählte Anzahl von Zellen mit gewählten Abmessungen und Positionen definieren und die Sendemittel (MER) so konfigurieren, dass sie Strahlen definieren, die jeweils mit wenigstens einer der definierten Zellen assoziiert sind, mit einer Trägerfrequenz und einem Frequenzpassband, die in Abhängigkeit von den Anforderungen jeder der Zellen und unter Berücksichtigung des an dem Satelliten (SAT) zur Verfügung stehenden Frequenzpassbands gewählt wurden,
wobei die Sendemittel (MER) in Form einer Antenne des aktiven Typs ausgelegt sind, die wenigstens Folgendes umfasst:
- N Gruppen (Gj) von M dritten Verarbeitungsmitteln (FFjk), die jeweils für einen Träger von N dediziert sind, wobei jedes dritte Verarbeitungsmittel (FFjk) einerseits einen Eingang (SCjk) zum Empfangen der Signale, die den Träger der Gruppe (Gj) präsentieren, zu der es gehört, assoziiert mit einem Strahl von NxM, und andererseits S Ausgänge (ECijk) zum Zuführen jedes der Signale der Träger seiner Gruppe (Gj) umfasst, die von an seinem Eingang (SCjk) empfangenen Signalen kommen;
- SxN zweite Verarbeitungsmittel (Dij), die jeweils M Eingänge (SBijk), die jeweils mit den entsprechenden Ausgängen (ECijk) des dritten Verarbeitungsmittels (FFjk) der entsprechenden Gruppe (Gj) gepaart sind, zum Empfangen der Signale von einem der N Träger, wobei M größer als 1 ist, und einen Ausgang (EBij) zum Zuführen von Signalen umfassen, die von einer Summierung der an den M Eingängen (SBijk) empfangenen N Träger resultieren;
- S erste Verarbeitungsmittel (SPi), die jeweils N Eingänge (SAij), die jeweils N Eingänge (SAij), die mit entsprechenden Ausgängen (EBij) der zweiten Verarbeitungsmittel (Dij) gepaart sind, zum Empfangen von Signalen von N verschiedenen Trägern, und einen Ausgang (EAi) zum Zuführen der Signale von höchstens N verschiedenen Trägern umfassen; und
- S Strahlungselemente (Ai), die zum Senden von verschiedenen Trägersignalen ausgelegt sind, wobei S größer als eins ist.

3. Sende- und/oder Empfangsvorrichtung nach Anspruch 1 oder 2, **dadurch gekennzeichnet, dass** die Sende- und/oder Empfangsmittel (MER) ferner S vierte Verarbeitungsmittel (MTi) umfassen, die zwischen die Strahlungselemente (Ai) und das erste entsprechende Verarbeitungsmittel (SPi) geschaltet sind, so ausgelegt, dass sie die Signale, die von den Strahlungsmitteln (Ai) empfangen werden oder vom ersten entsprechenden Verarbeitungsmittel (SPi) kommen, verstärken und/oder digital-analogwandeln und/oder frequenzumsetzen, um das erste entsprechende Verarbeitungsmittel (SPi) mit verstärkten und/oder digitalisierten und/oder frequenzumgesetzten Signalen zu speisen und/oder das entsprechende Strahlungselement (Ai) mit verstärkten und/oder analogen und/oder frequenzumgesetzten Signalen zu speisen.

4. Vorrichtung nach einem der Ansprüche 1 bis 3, **dadurch gekennzeichnet, dass** jedes erste Verarbeitungsmittel (SPi) N frequenzselektive Filter umfasst, die jeweils so ausgelegt sind, dass sie eine der Trägerfrequenzen der an ihrem Ein-/Ausgang (EAi) empfangenen Signale aus höchstens N auswählen, und/oder so ausgelegt sind, dass sie alle Signale von höchstens N verschiedenen Trägern miteinander gruppieren, die an ihren N Ein-/Ausgängen (SAij) empfangen werden.

5. Vorrichtung nach einem der Ansprüche 1 bis 4, **dadurch gekennzeichnet, dass** jedes erste Verarbeitungsmittel (SPi) so ausgelegt ist, dass es die Frequenzen der N Träger vor dem Zuführen zu seinen N Aus-/Eingängen (SAij) oder seinem Ein-/Ausgang (EAi) ändert.

6. Vorrichtung nach einem der Ansprüche 1 bis 5, **dadurch gekennzeichnet, dass** die Steuermittel (MC) so ausgelegt sind, dass sie jedes erste Verarbeitungsmittel (SPi) so konfigurieren, dass es die Frequenzen und jeweiligen Passbänder der Träger der Signale, die an jedem seiner Aus-/Eingänge (SAij) zugeführt und/oder empfangen werden, sowie die Anzahl der verschiedenen Träger festlegt.

7. Vorrichtung nach einem der Ansprüche 1 bis 6, **dadurch gekennzeichnet, dass** die Steuermittel (MC) so ausgelegt sind, dass sie eine Anzahl von dritten Verarbeitungsmitteln (FFjk) aktivieren, die in Abhängigkeit von den Zonen, in denen sich die definierten Zellen befinden, und/oder von den Abständen zwischen definierten Zellen ausgewählt werden.

8. Vorrichtung nach einem der Ansprüche 1 bis 7, **dadurch gekennzeichnet, dass** die Steuermittel (MC) so ausgelegt sind, dass sie die gewählte Anzahl von Zellen mit gewählten Abmessungen und Positionen in Abhängigkeit von Befehlen, die die jeweiligen Positionen von Stationen (TUh) repräsentieren, die in den Zellen enthalten sein müssen, und von den Frequenzen der Träger und Passbänder definieren, die jeweils den Stationen (TUh) zugewiesen werden müssen.

9. Vorrichtung nach Anspruch 8, **dadurch gekennzeichnet, dass** wenigstens ein Teil der Befehle von einer Steuerstation (CTL) gesendet wird.

10. Vorrichtung nach Anspruch 8 oder 9, **dadurch gekennzeichnet, dass** wenigstens ein Teil der Befehle von Rechenmitteln (PA) zugeführt wird, die in dem Satelliten (SAT) installiert sind, und ermittelt von Letzteren auf der Basis der Signale von NxM Trägern, die an jeden Aus-/Eingang (SCjk) des dritten Verarbeitungsmittels (FFjk) angelegt werden.

11. Vorrichtung nach einem der Ansprüche 8 bis 10, **dadurch gekennzeichnet, dass** sie Ortungsmittel (ML) zum Detektieren der Positionen der Stationen (TUh) auf der Basis der von dem Sende-/Empfangsmittel (MER) empfangenen Signale umfasst.

12. Kommunikationssatellit (SAT) für ein Kommunikationsnetz, **dadurch gekennzeichnet, dass** er eine Vorrichtung zum Senden und/oder Empfangen von Signalen (D) nach einem der vorherigen Ansprüche umfasst.
